# EUROPEAN PATENT SPECIFICATION

(11) **EP 1 162 437 B1**
(45) Date of publication and mention of the grant of the patent: **20.08.2003**
(21) Application number: 00610056.4
(22) Date of filing: 09.06.2000
(51) Int. Cl.: G01G 11/00

(54) **A coal feeder**
Kohlenförderer
Transporteur de charbon

(43) Date of publication of application: 12.12.2001
(73) Proprietor: Asnaesvaerket I/S (Division Vest Service), 4400 Kalundborg (DK)
(72) Inventor: Olsen, Hans Joergen, 4281 Goerlev (DK)
(74) Representative: Noergaard, Tage

(56) References cited:
- DE-A- 19 820 155
- US-A- 4 353 427
- US-A- 5 588 354

## Description

The invention relates to a coal feeder allowing a weighing of the coals while said coals pass through said coal feeder, where the coal feeder comprises a cylindrical housing and a belt weigher arranged in said housing and provided with a frame as well as a cleaning conveyor mounted below said belt weigher, whereby the housing comprises a supply inlet for coal from a coal supply, such as a silo, at one end and at the opposite end comprises a discharge outlet for the weighed coal, which for instance is to be processed or used for heating purposes.

A feeder apparatus preferably for feeding coal is known. This feeder apparatus comprises a partially cylindrical housing in which a belt weigher with an endless belt as well as a lower cleaning conveyor also with an endless belt are mounted. The cleaning conveyor is used for collecting coals unintendedly dropped off the belt weigher and downwards towards the bottom of the housing. The belt weigher and the cleaning conveyor are permanently mounted inside the housing on radially extending axle journals. Such a structure of the feeder apparatus is not completely satisfactory because the cleaning thereof is difficult as it is difficult to disassemble the apparatus. Furthermore, the operator handling the cleaning easily gets very dirty. It should be noted that the belt weigher is a belt weigher known per se which has nothing to do directly with the present invention. Such apparatus is disclosed in US-A-4 353 427.

The object of the invention is to provide a coal feeder of the above type which is more user-friendly with respect to service and repair than the known coal feeders as said service and repair can be carried out in a rather fast manner by a single operator without the operator getting noticeably dirty.

The coal feeder according to the invention is characterised in that the belt weigher and the cleaning conveyor are mounted so as to be easily removable from the cylinder by means of longitudinal side guiding members mounted on the inner wall of the cylinder, and that at least one bottom of the cylinder can be opened for a removal of the belt weigher and the cleaning conveyor. The resulting coal feeder is very user-friendly with respect to service and repair because the belt weigher and the cleaning conveyor can be easily pulled out of the cylinder while sliding on the plastic coating so as to be serviced and repaired outside said cylinder. The latter operation can be carried out by a single operator without the operator getting noticeably dirty. Moreover, the structure of the coal feeder is particularly simple.

Each side guiding member may according to the invention be formed by at least one angle guide covered by plastics, whereby the plastics for instance is in form of a Teflon® or Nylon®-coating or a strip made of said materials and fastened on said angle guide. As a result the belt weigher and the cleaning conveyor are particularly "smooth-acting" inside the cylinder when they are to be pulled out thereof.

Furthermore each side guiding member may according to the invention be formed by abutting angle guides, a predetermined clearance, however, applying between said guides, whereby the frame of the belt weigher can rest on the uppermost angle guide while some side webs projecting from a trough can extend into said clearance. This embodiment turned out to be particularly advantageous because the plastics forming the walls of said clearance renders it difficult for the coals or the coal particles to block the sliding movement of the cleaning conveyor when the belt weigher and said cleaning conveyor are to be pulled out of the cylinder.

The angle guides may according to the invention be mounted on the wall of the cylinder by being partly inserted into one another in such a manner that at least the first webs of the individual angle guides abut one another while a clearance applies between the second web of one angle guide and the second web of another angle guide. As a result the side guiding members are reinforced because the angle guides brace one another.

Moreover side supporting rolls may according to the invention be mounted on the inner wall of the cylinder or on or at the top side of the side guiding members so as to support the conveyor belt of the belt weigher. As a result a good side support is ensured for the conveyor belt of the belt weigher.

Retaining means may according to the invention be accommodated at each end of the frame of the belt weigher, whereby once the cylinder has been opened leg supporting means can be fastened on said retaining means after the pulling out of the belt weigher with the frame from said cylinder. As a result, the frame of the belt weigher and the trough associated with the cleaning conveyor can be provided with a suitable support after the pulling out of the cylinder in such a manner that said belt weigher and said trough are easy to handle, viz. move about, outside said cylinder.

Moreover, the cylinder may according to the invention be adapted to operate under an overpressure, preferably an overpressure of 1 to 2 bar, but under particular conditions 1 to 10 bar. The resulting coal feeder can resist pressures corresponding to approximately 10 bar in case of a detonation elsewhere in the plant equipment coupled to the coal feeder.

The cleaning conveyor may according to the invention be formed by a worm conveyor, and the manufacture of such an embodiment turned out to be particularly cost-saving.

In addition, each leg supporting means may according to the invention be formed by a substantially H-shaped frame, where the lower ends of the H are provided with wheels of the castor type, and where the remaining ends of the H are provided with fork-like members adjustable with respect to height and capable of co-operating with retaining means accommodated on the frame of the belt weigher. The resulting structure is particularly simple.

Auxilliary leg supporting means may according to the invention be provided for a separate support of the trough when said trough has been removed from the cylinder with the result that the belt weigher and the trough of the cleaning conveyor can be handled independently after the removal from the cylinder.

Finally, the upper run of the belt weigher may be U-shaped with the result that an improved control of the coals is obtained while said coals are placed on the belt weigher.

The invention is explained in detail below with reference to the drawing, in which
Figure 1 is a perspective view of a coal feeder according to the invention, where the inner parts of said coal feeder are shown by means of dotted lines,
Figure 2 is an end view of the cylindrical housing, the front bottom of the cylinder being opened,
Figure 3 illustrates a side supporting means in form of two joined angle guides,
Figure 4 illustrates a side supporting means in form of two opposing angle guides,
Figure 5 illustrates a side supporting means in form of only one angle guide,
Figures 6 illustrates a belt weigher with an associated frame arranged on a front leg supporting means and a rear leg supporting means, and
Figure 7 illustrates an auxiliary leg supporting means to be used in connection with the support of the trough of the cleaning conveyor.

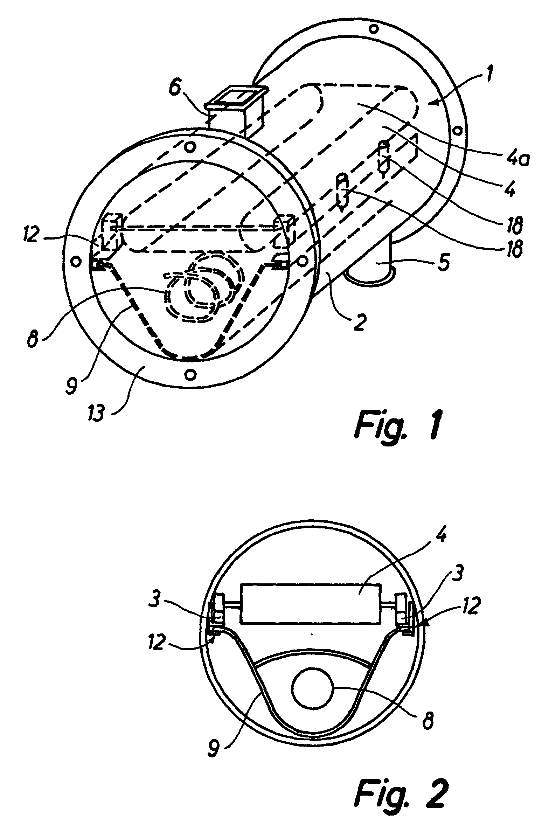

The coal feeder illustrated in Figure 1 is designated the general reference numeral 1.

In addition to the feeding the coal feeder ensures an automatic and continuous weighing of the coals passing through said coal feeder. The weighing device has, however, not been shown as it is not relevant for the invention. The coal feeder 1 comprises a supply inlet 6 and a discharge outlet 5, where the supply inlet is connected to a coal supply not shown, such as a coal silo, whereas the discharge outlet is connected to for instance a coal mill not shown or a location where the coals are to be processed/treated. The discharge outlet can also be connected to a burner.

The coal feeder 1 comprises a cylindrical housing 2 and a belt weigher 4 provided with a frame 3 as well as a cleaning conveyor 8 mounted below said belt weigher. The use of a belt weigher is advantageous in allowing a rather accurate adjustment of the quantity of coal advanced per time unit to the flow of air necessary for the combustion.

The belt weigher 4 and the cleaning conveyor 8 are mounted in such a manner that they are easily removable from the cylinder 2 by means of longitudinal side guiding members 12 mounted on the inner wall of said cylinder 2. At each end of the cylinder a bottom is mounted, and the front bottom 13 can be opened for removal of the belt weigher 4 and the cleaning conveyor 8. The rear bottom can be removed, but need not be hinged to the cylinder. As illustrated, the bottoms are shaped as a spherical segment with a circumferential flange.

The coal feeder comprises also driving means for driving the belt weigher and the cleaning conveyor, but these driving means are not illustrated because they are not directly related to the invention. However, the driving means can be easily disconnected from the member and the belt weigher when said member and said belt weigher are to be removed from the cylinder for service/repair purposes.

As illustrated in Figures 2 to 5, each side guiding member 12 can comprise at least one angle guide coated with plastics. The plastic coating can for instance be made of Teflon® or Nylon®. The angle guide can also be covered by one or more strips of plastics, such as Teflon® or Nylon®, fixedly screwed onto the angle guide.

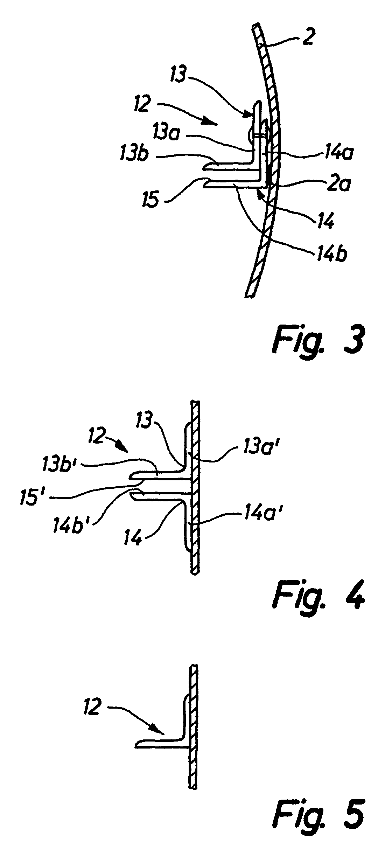

As illustrated in Figures 2 and 3, each side guiding member can comprise two abutting angle guides 13 and 14. A clearance 15 exists between the guides. The frame 3 of the belt weigher rests on top of the angle guide 13. Some side webs 9a project into the clearance 15, said side webs 9a being accommodated on the trough 9 associated with the cleaning conveyor 8.

As clearly illustrated in Figure 3, the angle guides 13 and 14 can be mounted on the wall of the cylinder 2 by being partly inserted into one another in such a manner that at least a first web 13a, 14a on each angle guide 13 and 14 abut one another, whereas the clearance 15 is provided between the second web 13b and 14b of the said two angle guides. As illustrated in Figure 4, the angle guides 13 and 14 can be mutually arranged such that the angle guide webs 13a'and 14a' are directed away from one another, whereas the angle guide webs 13b' and 14b' are arranged parallel to one another, a relatively small clearance 15' existing between the latter. The side supporting means 12 are permanently welded at 2a to the wall 2 of the cylinder, whereas the angle guides for instance can be rivetted as shown.

Side supporting rollers 18 can be mounted on the inner wall of the cylinder 2 or at the top side of the side supporting members 12 so as to form a side support for the conveyor belt of the belt weigher 4.

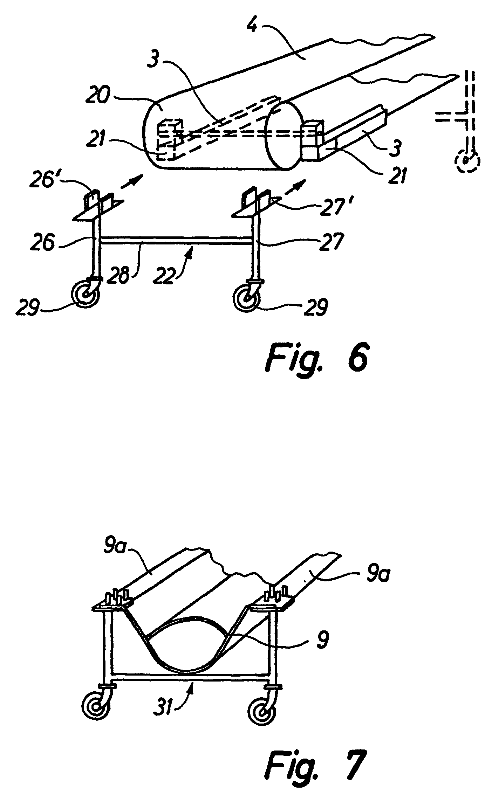

At each end, such as the end 20, of the frame 4 of the belt weigher 4, retaining means 21 can optionally be provided, and the leg supporting means 22 can be fastened to said retaining means after the belt weigher 4 has been pulled out of the cylinder after the opening of said cylinder 2. Both the front end 20 of the frame 3 and the rear end of said frame can be provided with leg supporting means, cf. Figure 6. As a result once the belt weigher has been pulled out of the cylinder, said belt weigher can be easily removed from said cylinder so as to be subjected to a service/repair.

The cylinder 2 can be adapted to operate under an overpressure, preferably a pressure of 1 to 2 bar and in particular cases 1 to 10 bar.

The cleaning conveyor 8 can be a worm conveyor, preferably of a very simple type.

As illustrated in Figure 6, each leg supporting means 22 can be formed by a substantially H-shaped frame with two vertical legs 26 and 27 interconnected by means of a horizontal bar 28. The upper end of the legs 26 and 27 can be provided with adjustable fork-like members 26' and 27', which can co-operate with the above retaining means 21 on the frame 3 of the belt weigher. The legs 26 and 27 can at the bottom be provided with wheels 29 of the castor type in such a manner that the belt weigher can be rolled around almost in the same manner as a hospital bed when said belt weigher has been provided with the leg supporting means.

As illustrated in Figure 7, auxiliary leg supporting means can be provided for a separate support of the trough 9 associated with the cleaning conveyor 8 when said cleaning conveyor has been removed from the cylinder; only the front auxiliary leg supporting means 31 being shown. It appears from the Figure how the auxiliary leg supporting means 31 is shaped substantially in the same manner as the leg supporting means 22 and can be fastened to the projecting side webs 9a of the trough 9.

Although the belt weigher 4 and the trough 9 of Figures 6 and 7 comprise their respective leg supporting means, it is possible for the leg supporting means 22 of Figure 6 to carry both the trough 9 and the belt weigher 4 at the same time, viz. when the frame of the belt weigher and the trough of the conveyor has been built into one unit.

Although the present application refers to "coal", this should not be construed in a narrow sense. Instead of coal, the present feeder can be used for a multitude of particulate materials to be be transported from a material supply, such as a silo, to a subsequent processing station. The particulate material can for instance be limestone, cereals, pelleted feedstuff and fertilizers.

The invention may be modified in many ways without thereby deviating from the scope thereof as defined in the appended claims.

## Claims

1. Coal feeder (1) allowing a weighing of the coals while said coals pass through said coal feeder, where the coal feeder (1) comprises a cylindrical housing (2) and a belt weigher (4) arranged in said housing and provided with a frame (3) as well as a cleaning conveyor (8, 9) mounted below said belt weigher, whereby the housing (2) comprises a supply inlet (6) for coal from a coal supply, such as a silo, at one end and at the opposite end comprises a discharge outlet (5) for the weighed coal to be further processed, such as heating, **characterised in that** the belt weigher (4) and the cleaning conveyor (8, 9) are mounted so as to be easily removable from the cylinder (2) by means of longitudinal side guiding members (12) mounted on the inner wall of the cylinder, and that at least one bottom (13) of the cylinder can be opened for removal of the belt weigher (4) and the cleaning conveyor (8, 9).

2. Coal feeder as claimed in claim 1, **characterised in that** each side guiding member (12) is formed by at least one angle guide (13, 14) covered by plastics, where the plastics for instance is in form of a Teflon® or Nylon®-coating or a strip of said materials secured on the angle guide.

3. Coal feeder as claimed in claim 1 or 2, **characterised in that** each side guiding member (12) comprises two abutting angle guides (13, 14), a predetermined clearance (15), however, existing therebetween, and that the frame of the belt weigher rests on the upper angle guide while some side webs (9a) projecting from a trough (9) associated with the cleaning conveyor extend into said clearance.

4. Coal feeder as claimed in one or more of the claims 1 to 3, **characterised in that** the angle guides (13, 14) are mounted on the wall of the cylinder (2) by being partly inserted in one another in such a manner that at least first webs (13a, 14a) on the individual angle guide (13, 14) abut one another, while a clearance (15) exists between the second web (13b) of one angle guide (13) and the second web (14b) of another angle guide (14).

5. Coal feeder as claimed in one or more of the claims 1 to 4, **characterised in that** side supporting rollers (18) are mounted on the inner wall of the cylinder (2) or at the top side of the side supporting members (12) so as to support the conveyor belt (4a) of the belt weigher (4).

6. Coal feeder as claimed in one or more of the claims 1 to 5, **characterised in that** retaining means (21) are provided at each end (20, 23) of the belt weigher (4), whereby once the cylinder (2) has been opened leg supporting means (22) can be fastened on said retaining means (21) after the pulling out of the belt weigher (4) with the frame from said cylinder (2).

7. Coal feeder as claimed in one or more of the claims 1 to 6, **characterised in that** the cylinder (2) has been adapted to operate under an overpressure, preferably a pressure of 1 to 2 bar, but under particular conditions a pressure of 1 to 10 bar.

8. Coal feeder as claimed in one or more of the claims 1 to 7, **characterised in that** the cleaning conveyor (7) is a worm conveyor.

9. Coal feeder as claimed in claim 6, **characterised in that** each leg supporting means is formed by a substantially H-shaped frame (26, 27), where the lower ends of the H are provided with wheels (29) of the castor type, and the upper ends of said H are provided with fork-like members (26', 27') adjustable in height and capable of cooperating with the retaining means (21) on the frame (3) of the belt weigher (4).

10. Coal feeder as claimed in one or more of the claims 1 to 9, **characterised in that** auxiliary leg supporting means (31) are provided for a separate support of the trough (9), when said trough has been removed from the cylinder (2).

11. Coal feeder as claimed in one nor more of the claims 1 to 10, **characterised in that** the upper run of the belt weigher is trough-shaped.

## Patentansprüche

1. Kohlezuführungsvorrichtung (1), die einen Wiegevorgang der Kohle ermöglicht, während die Kohle durch die Kohlezuführungsvorrichtung hindurchgeht, wobei die Kohlezuführungsvorrichtung (1) ein zylindrisches Gehäuse (2) und eine Gurtwiegeeinrichtung (4) aufweist, die in dem Gehäuse angeordnet ist und mit einem Rahmen (3) versehen ist, sowie einen Reinigungsförderer (8, 9), der unterhalb der Gurtwiegeeinrichtung angebracht ist, wobei das Gehäuse (2) einen Versorgungseinlaß (6) für Kohle von einem Kohlevorrat wie beispielsweise einem Silo an einem Ende aufweist und an dem gegenüberliegenden Ende einen Abgabeauslaß (5) für die gewogene Kohle aufweist, die weiter zu verarbeiten ist, beispielsweise zu erwärmen ist, **dadurch gekennzeichnet, daß** die Gurtwiegeeinrichtung (4) und der Reinigungsförder (8, 9) so angebracht sind, daß sie von dem Zylinder (2) leicht abgenommen werden können, mittels längsseitiger Führungselemente (12), die auf der inneren Wand des Zylinders angebracht sind, und daß zumindest ein Boden (13) des Zylinders geöffnet werden kann, um die Gurtwiegeeinrichtung (4) und den Reinigungsförderer (8, 9) herauszunehmen.

2. Kohlezuführungsvorrichtung nach Anspruch 1, **dadurch gekennzeichnet, daß** jedes seitliche Führungselement (12) durch zumindest eine Winkelführung (13, 14) gebildet ist, die mit Kunststoff abgedeckt ist, wobei der Kunststoff beispielsweise in Form einer Teflon®oder einer Nylon®-Beschichtung oder eines Streifens der genannten Materialien, der auf der Winkelführung befestigt ist, ausgebildet ist.

3. Kohlezuführungsvorrichtung nach Anspruch 1 oder 2, **dadurch gekennzeichnet, daß** jedes seitliche Führungselement (12) zwei aneinander anstoßende Winkelführungen (13, 14) aufweist, zwischen denen ein vorbestimmter Zwischenraum besteht, und daß der Rahmen der Gurtwiegeeinrichtung auf der oberen Winkelführung aufliegt, während sich seitliche Stege (9a), die von einem Trog (9) vorstehen, der dem Reinigungsförderer zugeordnet ist, in den genannten Zwischenraum hinein erstrecken.

4. Kohlezuführungsvorrichtung nach einem oder mehreren der Ansprüche 1 bis 3, **dadurch gekennzeichnet, daß** die Winkelführungen (13, 14) auf der Wand des Zylinders (2) angebracht sind, indem sie auf eine solche Weise teilweise ineinander geschoben sind, daß zumindest erste Stege (13a, 14a) auf den einzelnen Winkelführungen (13, 14) gegeneinander anliegen, während ein Zwischenraum (15) zwischen dem zweiten Steg (13b) einer Winkelführung (13) und dem zweiten Steg (14b) einer anderen Winkelführung (14) besteht.

5. Kohlezuführungsvorrichtung nach einem oder mehreren der Ansprüche 1 bis 4, **dadurch gekennzeichnet, daß** seitliche Stützrollen (18) auf der inneren Wand des Zylinders (2) oder an der Oberseite der seitlichen Stützelemente (12) angebracht sind, um den Fördergurt (4a) der Gurtwiegeeinrichtung (4) abzustützen.

6. Kohlezuführungsvorrichtung nach einem oder mehreren der Ansprüche 1 bis 5, **dadurch gekennzeichnet, daß** Haltemittel (21) an jedem Ende (20, 23) der Gurtwiegeeinrichtung (4) vorgesehen sind, wobei dann, sobald der Zylinder (2) geöffnet worden ist, eine Stützfußeinrichtung (22) an dem Haltemittel (21) befestigt werden kann, nachdem die Gurtwiegeeinrichtung (4) mit dem Rahmen aus dem Zylinder (2) herausgezogen worden ist.

7. Kohlezuführungsvorrichtung nach einem oder mehreren der Ansprüche 1 bis 6, **dadurch gekennzeichnet, daß** der Zylinder (2) so eingerichtet ist, daß er unter einem Überdruck arbeiten kann, vorzugsweise einem Druck von 1 bis 2 bar, unter speziellen Bedingungen unter einem Druck von 1 bis 10 bar.

8. Kohlezuführungsvorrichtung nach einem oder mehreren der Ansprüche 1 bis 7, **dadurch gekennzeichnet, daß** der Reinigungsförderer (7) ein Schneckenförderer ist.

9. Kohlezuführungsvorrichtung nach Anspruch 6, **dadurch gekennzeichnet, daß** jede Stützfußeinrichtung durch einen im wesentlichen H-förmigen Rahmen (26, 27) gebildet ist, wobei die unteren Enden des H mit Rädern (29) vom Schwenkrollentyp versehen sind, wobei die oberen Enden des H mit gabelartigen Teilen (26', 27') versehen sind, die in der Höhe verstellbar sind und in der Lage sind, mit den Haltemitteln (21) auf dem Rahmen (3) der Gurtwiegeeinrichtung (4) zusammenzuwirken.

10. Kohlezuführungsvorrichtung nach einem oder mehreren der Ansprüche 1 bis 9, **dadurch gekennzeichnet, daß** eine zusätzliche Stützfußeinrichtung (31) für eine getrennte Abstützung des Trogs (9) vorgesehen ist, wenn der Trog von dem Zylinder (2) abgenommen worden ist.

11. Kohlezuführungsvorrichtung nach einem oder mehreren der Ansprüche 1 bis 10, **dadurch gekennzeichnet, daß** der obere Lauf der Gurtwiegeeinrichtung trogförmig ausgebildet ist.

## Revendications

1. Transporteur à charbon (1) permettant de peser les charbons alors que lesdits charbons transitent dans ledit transporteur à charbon, le transporteur à charbon (1) comprenant un boîtier cylindrique (2) et un dispositif de pesée à courroie (4) disposé dans ledit boîtier et comportant un cadre (3) ainsi qu'un convoyeur de nettoyage (8, 9) monté au-dessous dudit dispositif de pesée à courroie, le boîtier (2) comprenant une entrée d'alimentation (6) pour le charbon provenant d'une source d'alimentation en charbon, telle qu'un silo, à une extrémité et comporte, à l'autre extrémité, une sortie d'évacuation (5) pour le charbon pesée pour la poursuite de son traitement, comme par exemple un chauffage, **caractérisé en ce que** le dispositif de pesée à courroie (4) et le convoyeur de nettoyage (8, 9 sont montés de manière à pouvoir être aisément retirés du cylindre (2) à l'aide d'éléments de guidage latéraux longitudinaux (12) montés sur la paroi intérieure du cylindre et qu'au moins un fond (13) du cylindre peut être ouvert pour le retrait du dispositif de pesée à courroie (4) et du nettoyeur de convoyage (8, 9).

2. Transporteur à charbon selon la revendication 1, **caractérisé en ce que** chaque élément de guidage latéral (12) est formé par au moins un guide en forme de cornière (13, 14) recouvert d'une matière plastique, la matière plastique se présentant par exemple sous la forme d'un revêtement en Téflon® ou de Nylon® ou d'une bande desdits matériaux fixée sur le guide en forme de cornière.

3. Transporteur à charbon selon la revendication 1 ou 2, **caractérisé en ce que** chaque élément de guidage latéral (12) comprend deux guides en forme de cornière en aboutement (13, 14), avec cependant l'existence d'un interstice prédéterminé (15) entre eux et que le cadre du dispositif de pesée à courroie est en appui sur le guide supérieur en forme de cornière alors que certaines âmes latérales (9a), qui font saillie à partir d'une auge (9) associée au convoyeur de nettoyage, s'étendent dans ledit interstice.

4. Transporteur à charbon selon l'une ou plusieurs des revendications 1 à 3, **caractérisé en ce que** les guides en forme de cornière (13, 14) sont montés sur la paroi du cylindre (2) en étant insérés partiellement l'une dans l'autre de telle sorte qu'au moins des premières âmes (13a, 14a) situées sur les guides individuels en forme de cornière (13,14) sont réciproquement en butée, tandis qu'un interstice (15) est présent entre la seconde âme (13b) d'un guide en forme de cornière (13) et la seconde âme (14b) de l'autre guide en forme de cornière (14).

5. Transporteur à charbon selon une ou plusieurs des revendications 1 à 4, **caractérisé en ce que** des rouleaux de support latéraux (18) sont montés sur la paroi intérieure du cylindre (2) au niveau du côté supérieur des éléments de support latéraux (12) de manière à supporter la courroie de convoyeur (4a) du dispositif de pesée à courroie (4).

6. Transporteur à charbon selon une ou plusieurs des revendications 1 à 5, **caractérisé en ce que** des moyens de retenue (21) sont prévus sur chaque extrémité (20, 23) du dispositif de pesée à courroie (4), auquel cas une fois que le cylindre (2) a été ouvert, des moyens (22) de support en forme de bras peuvent être fixés sur lesdits moyens de retenue (21) après l'extraction du dispositif de pesée à courroie (4) avec le cadre hors dudit cylindre (2).

7. Transporteur à charbon selon une ou plusieurs des revendications 1 à 6, **caractérisé en ce que** le cylindre (2) a été adapté pour fonctionner sous une surpression, de préférence une pression comprise entre 1 et 2 bars, mais dans des conditions particulières à une pression comprise entre 1 et 10 bars.

8. Transporteur à charbon selon une ou plusieurs des revendications 1 à 7, **caractérisé en ce que** le convoyeur de nettoyage (7) est un convoyeur à vis sans fin.

9. Transporteur à charbon selon la revendication 6, **caractérisé en ce que** chacun des moyens de support en forme de bras est formé par un cadre essentiellement en forme de H (26, 27), les extrémités inférieures du H étant pourvues de roues (29) du type roulettes orientables et que les extrémités supérieures dudit H sont pourvues d'éléments en forme de fourches (26', 27') pouvant être réglées en hauteur et aptes à coopérer avec les moyens de retenue (21) situés sur le cadre (3) du dispositif de pesée à courroie (4).

10. Transporteur à charbon selon une ou plusieurs des revendications 1 à 9, **caractérisé en ce que** des moyens de support formant bras auxiliaires (31) sont prévus pour un support séparé de l'auge (9), lorsque ladite auge a été retirée du cylindre (2).

11. Transporteur à charbon selon une ou plusieurs des revendications 1 à 10, **caractérisé en ce que** le brin supérieur du dispositif de pesée à courroie est en forme d'auge.
